# EUROPÄISCHE PATENTSCHRIFT

(11) **EP 2 896 809 B1**
(45) Veröffentlichungstag und Bekanntmachung des Hinweises auf die Patenterteilung: **21.06.2017**
(21) Anmeldenummer: 14195935.3
(22) Anmeldetag: 02.12.2014
(51) Int. Cl.: F02D 41/40, F02D 41/38

(54) **Verfahren zum Ermitteln eines Einspritzdruckes und Kraftfahrzeug**
Method for determining an injection pressure and motor vehicle
Procédé de détermination d'une pression d'injection et véhicule automobile

(30) Priorität: 15.01.2014 DE 102014200591
(43) Veröffentlichungstag der Anmeldung: 22.07.2015
(73) Patentinhaber: Volkswagen Aktiengesellschaft, 38440 Wolfsburg (DE)
(72) Erfinder: Mannigel, Dieter, 38116 Braunschweig (DE); Schulz, Michael, 38518 Gifhorn (DE); Dockhorn, Matthias, 38442 Wolfsburg (DE)

(56) Entgegenhaltungen:
- DE-A1- 19 726 757
- DE-A1-102009 041 060
- GB-A- 2 475 060

## Beschreibung

Die Erfindung betrifft ein Verfahren zum Ermitteln eines Einspritzdruckes zum Einspritzen eines Kraftstoffes durch ein Einspritzventil in einen Zylinder einer Verbrennungskraftmaschine und ein Kraftfahrzeug mit einer Steuerung, die das Verfahren ausführt.

Um den Kraftstoffverbrauch von Verbrennungskraftmaschinen von Kraftfahrzeugen möglichst gering zu halten, ist es bekannt, Kraftstoff in die Zylinder von Verbrennungskraftmaschinen mit Kraftstoffeinspritzventilen einzuspritzen. Als Kraftstoffeinspritzung hat sich die sogenannte Common-Rail-Einspritzung etabliert, die auch Speichereinspritzung genannt wird. Der Begriff "Common Rail" stammt aus dem Englischen und steht für gemeinsame Leiste ("common rail"), womit die Verwendung eines gemeinsamen Kraftstoff-Hochdruckspeichers ausgedrückt wird. Der Kraftsoff-Hochdruckspeicher (das Rail), ist oftmals in Form eines Rohres ausgestaltet. An dem Rohr sind die Einspritzventile, die auch als (Kraftstoff-)Injektoren bezeichnet werden, zur Versorgung der Zylinder mit Kraftstoff angeschlossen. Eine Kraftstoff-Hochdruckpumpe, die mit dem Kraftstoff-Hochdruckspeicher verbunden ist, setzt den Kraftstoff unter hohen Druck, der weit oberhalb von 1000 bar liegen kann.

Die Kraftstoffmenge, die über den Kraftstoff-Injektor in den Zylinder gespritzt werden soll, muss vor der Einspritzung bekannt sein, um den Kraftstoffverbrauch und den Schadstoffausstoß einer Verbrennungskraftmaschine zu optimieren. Die Kraftstoffmenge kann berechnet werden, wenn der Einspritzdruck bekannt ist, unter dem der Kraftstoff durch den Kraftstoff-Injektor in den Zylinder eingespritzt wird. Der Einspritzdruck entspricht bei Common-Rail-Einspritzsystemen auch dem Raildruck, da dieser im Rail anliegt und somit auch am jeweiligen Kraftstoff-Injektor anliegt.

Zur Messung des Raildrucks ist es bekannt, einen Raildrucksensor einzusetzen oder den Raildruck aus anderen Messgrößen zu berechnen. Zum Beispiel ist es aus der deutschen Patentschrift DE 10 2008 021 581 B3 bekannt, dass die Kraftstoff-Hochdruckpumpe durch die Bewegung einer Kurbelwelle einer Verbrennungskraftmaschine angetrieben wird, wobei aus einer zeitabhängigen Veränderung der Winkelgeschwindigkeit der Kurbelwelle eine Veränderung des Raildrucks ermittelt werden kann.

Aus der Zusammenfassung zur chinesischen Offenlegungsschrift CN 109092191 A ist ein Simulationsverfahren bekannt, mit dem ein Raildruckwert simuliert werden kann. Bei dem Verfahren wird zunächst ein Grundwert für den Raildruckwert ermittelt und dann werden Korrekturwerte für einen statischen Zustand und einen dynamischen Zustand berechnet und der simulierte Grundwert wird entsprechend mit den Korrekturwerten korrigiert. Dieses Verfahren ist aufwändig.

Aus der internationalen Veröffentlichung WO 2011/072293A1 ist ein Verfahren zur Abschätzung einer Durchflussrate durch einen piezoelektrischen Injektor bekannt. Dazu wird der Injektor zunächst mit einem ersten elektrischen Signal betrieben und es wird eine Spannung, die während dieses Betriebs des Injektors am Injektor anliegt, gemessen. Aus der gemessenen Spannung kann ein korrigiertes elektrisches Signal berechnet werden. Dazu ist aus vorhergehenden Messungen ein Zusammenhang zwischen der am Injektor anliegenden Spannung und einer mit dieser Spannung eingespritzten Kraftstoffmenge bekannt. Eine Ermittlung des Raildrucks zum Zeitpunkt der Einspritzung ist damit allerdings nicht möglich. GB 2475060 betrifft ein Verfahren zum Schätzen eines Kraftstoffeinspritzdrucks mittels eines mathematischen Modells, wobei gemessene Druckwerte für eine Modellanpassung verwendet werden. Aufgabe der vorliegenden Erfindung ist es, ein Verfahren zum Ermitteln eines Einspritzdruckes zum Einspritzen eines Kraftstoffes durch ein Einspritzventil in einen Zylinder einer Verbrennungskraftmaschine bereitzustellen, das die oben genannten Nachteile wenigstens teilweise überwindet.

Diese Aufgabe wird durch das erfindungsgemäße Verfahren nach Anspruch 1 beziehungsweise das Kraftfahrzeug nach Anspruch 6 gelöst.

Nach einem ersten Aspekt stellt die vorliegende Erfindung ein Verfahren zum Ermitteln eines Einspritzdruckes zum Einspritzen eines Kraftstoffes durch ein Einspritzventil in einen Zylinder einer Verbrennungskraftmaschine gemäß Patentanspruch 1 bereit.

Nach einem zweiten Aspekt stellt die vorliegende Erfindung ein Kraftfahrzeug mit einer Verbrennungskraftmaschine bereit, die wenigstens einen Zylinder mit einem Einspritzventil zum Einspritzen von Kraftstoff in den Zylinder aufweist, mit einer Kraftstoffpumpe, die einen Einspritzdruck zum Einspritzen des Kraftstoffes in den wenigstens einen Zylinder erzeugt, und mit einer Steuerung, wobei die Steuerung dazu eingerichtet ist, das Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Eine Verbrennungskraftmaschine hat einen oder mehr Zylinder, in denen Kraftstoff verbrannt wird. Der Kraftstoff wird durch ein sogenanntes Einspritzventil in den Zylinder eingespritzt und dabei versprüht, so dass ein brennbares Kraftstoff-Luft-Gemisch im Zylinder entsteht. Die Verbrennungskraftmaschine kann zur Verbrennung von Benzin oder Diesel oder einem anderen Kraftstoff ausgelegt sein. Entsprechend kann es sich bei der Verbrennungskraftmaschine um einen Benzin-Ottomotor oder einen Dieselmotor oder dergleichen handeln. Das Einspritzventil kann ein Magnetventil oder auch ein piezoelektrisch betriebenes Einspritzventil sein. Solche Einspritzventile sind grundsätzlich bekannt.

Der Kraftstoff wird von einer Kraftstoffpumpe mit einem Einspritzdruck beaufschlagt. Die Kraftstoffpumpe ist als Hochdruckpumpe ausgestaltet und kann einen Einspritzdruck erzeugen, der z.B. oberhalb von 1000 bar liegen kann, z.B. bei 1600 bar. Bei anderen Ausführungsbeispielen kann der Einspritzdruck aber auch geringer sein und z.B. bei 200 bar liegen.

Die Einspritzventile zusammen mit der Kraftstoffpumpe bilden ein Einspritzsystem. Bei manchen Ausführungsbeispielen ist das Einspritzsystem als ein grundsätzlich bekanntes Common-Rail-Einspritzsystem ausgebildet, sodass der Einspritzdruck, wie eingangs erläutert, bei solchen Ausführungsbeispielen dem Raildruck entspricht.

Der Einspritzdruck liegt an dem Einspritzventil an, sodass beim Öffnen des Einspritzventils der Kraftstoff mit dem Einspritzdruck oder mit einem durch das Einspritzventil modifizierten Druck in den Zylinder eingespritzt wird. Da die Spezifikation des Einspritzventils bekannt ist, ist auch bekannt, wie das Einspritzventil den Einspritzdruck modifiziert, so dass grundsätzlich auch bekannt ist, mit welchem Druck der Kraftstoff in den Zylinder bei einem gegebenen Einspritzdruck eingespritzt wird.

Wie oben bereits ausgeführt, ist es bekannt, den Einspritzdruck, insbesondere den Raildruck zu messen. Um die Kraftstoffmenge, die in den Zylinder eingespritzt wird, genau zu ermitteln, sollte der Einspritzdruck möglichst nahe an dem Zeitpunkt ermittelt werden, an dem der Kraftstoff durch das Einspritzventil in den Zylinder gespritzt wird. Der Einspritzdruck kann schwanken, z.B. aufgrund von einer geänderten Leistungsanforderung an die Verbrennungskraftmaschine, geänderter Drehzahl der Verbrennungskraftmaschine, Einschalten eines Verbrauchers, Änderung von Umweltbedingungen, die z.B. zum Einschalten eines Verbrauchers führen (Scheibenwischer, Licht, Lüftung, Klimaanlage, etc.) oder dergleichen, was wiederum zu einer Veränderung der Leistungsanforderung an die Verbrennungskraftmaschine führen kann. Außerdem kann der Raildruck auch unter stationären Betriebsbedingungen der Verbrennungskraftmaschine aufgrund eines Pumpenhubes einer Hochdruckpumpe schwanken, die den Raildruck erzeugt.

Die Messung des Einspritzdruckes kann, wie eingangs erwähnt, direkt über einen Drucksensor geschehen oder indirekt über eine andere Messgröße, aus der sich der Einspritzdruck, der am Einspritzventil anliegt, ableiten lässt.

Aus dem Einspritzdruck wird typischerweise eine Ansteuerdauer des Einspritzventils berechnet, da sich aus der Öffnungszeit des Einspritzventils und dem Einspritzdruck die Kraftstoffmenge berechnen lässt, die durch das Einspritzventil eingespritzt wird. Die Berechnung der Ansteuerdauer des Einspritzventils benötigt je nach Ausführungsbeispiel eine gewisse Zeitdauer und kann aufwändig und rechenintensiv sein, sodass unter Umständen eine genaue Messung des Einspritzdruckes möglichst nahe, d.h. wenige 100 Millisekunden oder weniger als 100 Millisekunden vor dem Einspritzzeitpunkt, der durch das Öffnen des Einspritzventils festgelegt ist, nicht möglich ist bzw. die Zeitdauer zwischen dem Zeitpunkt der Messung des Einspritzdruckes und dem Einspritzzeitpunkt nicht ausreicht, um die Ansteuerdauer des Kraftstoffventils zu berechnen.

Zur Steuerung der Verbrennungskraftmaschine soll bei manchen Ausführungsbeispielen jeweils eine gewünschte (vorgegebene, berechnete) Kraftstoffmenge in den bzw. die Zylinder der Verbrennungskraftmaschine eingespritzt werden. Aus der Kenntnis des Einspritzdrucks und der Ansteuerdauer des jeweiligen Einspritzventils kann die Kraftstoffmenge berechnet werden, die von dem Einspritzventil bei einer bestimmten Öffnungszeit, die durch die Ansteuerdauer gegeben ist, und dem gegebenen Einspritzdruck in den zugehörigen Zylinder gespritzt wird. Damit kann bei Kenntnis des Einspritzdruckes eine Ansteuerdauer des Einspritzventils berechnet werden, bei der die gewünschte Kraftstoffmenge in den Zylinder eingespritzt wird.

Wie eingangs ebenfalls erwähnt, ist es bekannt den Einspritzdruck zu simulieren. Dazu werden Parameter, die zum Beispiel von der Kraftstoffpumpe stammen, verwendet. Die Simulation des Einspritzdruckes erfolgt bei manchen Ausführungsbeispielen sehr schnell, da sie weniger aufwändig, d.h. weniger rechenintensiv sein kann, als die Messung des Einspritzdruckes. Bei anderen Ausführungsbeispielen dauert die Simulation des Einspritzdruckes länger als die Messung des Einspritzdruckes, dafür kann aber mit der Simulation des Einspritzdruckes früher begonnen werden, z.B. während einer Phase in der die Kraftstoffpumpe den Einspritzdruck aufbaut, so dass mehr Zeit zur Ermittlung des Einspritzdruckes zur Verfügung steht, als es bei der Messung des Einspritzdruckes der Fall ist, die erst nach Bereitstellung des Einspritzdruckes durch die Kraftstoffpumpe möglich ist.

Während der gemessene Einspritzdruck sehr genau ist, insbesondere, wenn die Verbrennungskraftmaschine in einem stabilen Zustand ist, in dem sich die Drehzahl oder Leistungsanforderung nicht verändert, ist der simulierte Einspritzdruck im Vergleich zum gemessenen Einspritzdruck ungenau. Dafür kann der simulierte Einspritzdruck schneller verfügbar sein, als der gemessene Einspritzdruck und der simulierte Einspritzdruck kann Schwankungen des Einspritzdruckes widerspiegeln bzw. den Einspritzdruck zeitlich näher am Einspritzzeitpunkt repräsentieren, als es bei dem gemessenen Einspritzdruck der Fall wäre.

Es wurde nun erkannt, dass durch eine Kombination des gemessenen Einspritzdruckes und eines simulierten Einspritzdruckes eine genaue Ermittlung des Einspritzdruckes möglich ist.

Dazu wird in einem ersten Arbeitszyklus des Zylinders ein erster Einspritzdruckwert des durch das Einspritzventil eingespritzten Kraftstoffes gemessen und es wird ein erster simulierter Einspritzdruckwert ermittelt. Ein Arbeitszyklus eines Zylinders entspricht dabei einer vollständig durchgeführten Hubbewegung eines Kolbens des Zylinders, wobei der Kolben am Anfang und am Ende eines Arbeitszyklusses, insbesondere erstmalig wieder, in derselben Position ist. Es kann eine Verbrennung pro Arbeitszyklus, bei einer Viertaktbrennkraftmaschine eine Verbrennung pro zwei Arbeitszyklen, stattfinden, wobei diese Verbrennung unterteilt sein kann in eine Reihe, schnell aufeinanderfolgender Explosionen bzw. Einspritzungen, wie weiter unten noch weiter ausgeführt wird.

In einem zweiten Arbeitszyklus des Zylinders wird ein zweiter simulierter Einspritzdruckwert ermittelt. Dann wird eine Differenz zwischen dem ersten simulierten Einspritzdruckwert und dem zweiten simulierten Einspritzdruckwert ermittelt. Dann wird ein Einspritzdruck zum Einspritzen des Kraftstoffes durch das Einspritzventil in den Zylinder im zweiten Arbeitszyklus auf Grundlage des gemessenen ersten Einspritzdruckwertes und der ermittelten Differenz zwischen dem ersten und dem zweiten simulierten Einspritzdruckwert ermittelt.

Der zweite Arbeitszyklus des Zylinders liegt dabei zeitlich nach dem ersten Arbeitszyklus. Der zweite Arbeitszyklus kann unmittelbar auf den ersten Arbeitszyklus folgen. Bei anderen Ausführungsbeispielen ist zwischen dem ersten und dem zweiten Arbeitszyklus wenigstens ein weiterer Arbeitszyklus vorhanden.

Dementsprechend wird der Einspritzdruck auf Grundlage des gemessenen Einspritzdruckwertes des ersten Arbeitszyklusses ermittelt, dessen Wert im oben erläuterten Sinne genau ist, und auf Grundlage der Differenz zwischen dem ersten und dem zweiten simulierten Einspritzdruckwert. Dem liegt die Annahme zugrunde, dass die Differenz zwischen dem ersten und dem zweiten simulierten Einspritzdruckwert bei einem stationären Zustand der Verbrennungskraftmaschine klein sein wird und folglich in solchen Fällen der ermittelte Einspritzdruck im Wesentlichen dem gemessenen Einspritzdruck des vorherigen, d.h. ersten Arbeitszyklusses entspricht. Ist der Zustand der Verbrennungskraftmaschine hingegen nicht stationär, sondern dynamisch, was eine Änderung des Einspritzdruckes zur Folge hat, wird die Differenz zwischen dem ersten simulierten Einspritzdruckwert des ersten Arbeitszyklusses und dem zweiten simulierten Einspritzdruckwert des zweiten Arbeitszyklusses groß sein und im Wesentlichen die Veränderung des Einspritzdruckes widerspiegeln, sodass der gemessene Einspritzdruckwert entsprechend um die Differenz und damit der Änderung des Einspritzdruckes vom ersten zum zweiten Arbeitszyklus angepasst wird.

Aus dem ermittelten Einspritzdruck zum Einspritzen des Kraftstoffes kann eine Einspritzmenge des einzuspritzenden Kraftstoffes berechnet werden. Die Einspritzmenge wird dabei auf Grundlage des ermittelten Einspritzdruckes, unter dem der Kraftstoff durch das Einspritzventil in den Zylinder eingespritzt wird, berechnet. Anhand weiterer Parameter, wie der Öffnungszeit des Einspritzventils, einer Öffnungsgröße des Einspritzventils, eines Druckunterschiedes zwischen dem Einspritzdruck, der am Einspritzventil anliegt und dem Druck, mit dem der Kraftstoff in den Zylinder gespritzt wird und dergleichen kann die exakte Einspritzmenge berechnet werden, bzw. das Einspritzventil kann durch die Kenntnis des ermittelten Einspritzdruckes derart gesteuert werden, dass eine vorgegebene Einspritzmenge in den Zylinder eingespritzt wird.

Bei manchen Ausführungsbeispielen gibt es in jedem Arbeitszyklus nicht nur eine Kraftstoffeinspritzung, sondern es können mehrere Einspritzungen stattfinden. Zum Beispiel kann es eine Voreinspritzung, eine Haupteinspritzung und eine Nacheinspritzung von Kraftstoff geben. Die Vor-, Haupt- und/oder Nacheinspritzung kann wiederum in mehrere Einspritzungen unterteilt sein. Daher können der erste gemessene Einspritzdruckwert und der erste simulierte Einspritzdruckwert jeweils einem Einspritzdruck an einem ersten vorgegebenen Zeitpunkt im ersten Arbeitszyklus entsprechen und der zweite simulierte Einspritzdruckwert kann einem Einspritzdruck an einem zweiten vorgegebenen Zeitpunkt im zweiten Arbeitszyklus entsprechen. Der erste Zeitpunkt und der zweite Zeitpunkt entsprechen dann einander. Damit wird sichergestellt, dass die Einspritzdruckwerte aus dem ersten und zweiten Arbeitszyklus auch unter gleichen oder ähnlichen Bedingungen ermittelt wurden. Das heißt, es wird z.B. der erste gemessene bzw. simulierte Einspritzdruckwert der ersten Voreinspritzung des ersten Arbeitszyklusses mit dem ersten simulierten Einspritzdruckwert der ersten Voreinspritzung des zweiten Arbeitszyklusses vergleichen, usw. Da die Arbeitszyklen unterschiedliche Zeitdauern haben können, kann die Entsprechung des ersten und des zweiten Zeitpunkts zueinander z.B. anhand eines ähnlichen oder identischen gemessenen Einspritzdruckwertes ermittelt werden. Es kann auch jeder Arbeitszyklus in eine identische Zahl von Zeitintervallen unterteilt sein und der erste und der zweite Zeitpunkt entsprechen dann z.B. jeweils dem Beginn, Ende oder Mittelpunkt des ersten Zeitintervalls im ersten bzw. zweiten Arbeitszyklus.

Der erste gemessene Einspritzdruckwert kann mittels eines Drucksensors gemessen werden, der in einer Zuleitung oder einem Rail vor dem bzw. den Einspritzventilen angeordnet ist.

Der erste und/oder der zweite simulierte Einspritzdruckwert können auf Grundlage von Betriebsdaten der Kraftstoffpumpe ermittelt werden. Betriebsdaten der Kraftstoffpumpe sind bspw. eine Umdrehungszahl der Kraftstoffpumpe, eine Leistungsaufnahme, eine Menge angesaugten Kraftstoffes in einem bestimmten Zeitintervall, usw. Außerdem kann ein Kraftstoffverlust, auch Leckage genannt, bei der Simulation des Einspritzdruckes mit berücksichtigt werden, der zu einer Erniedrigung des Einspritzdruckes führt. Unter Leckage versteht man Verlust von Kraftstoff, der an beweglichen Teilen des Einspritzventils (Injektors) bzw. an Schaltventilen aus dem Rail auf der Hochdruckseite in einen Rücklauf zur Kraftstoffpumpe bzw. zum Kraftstofftank auf der Niederdruckseite gelangt. Außerdem führt das Einspritzen des Kraftstoffes in den Zylinder ebenfalls zu einem Verlust an Kraftstoff im Kraftstoffzufuhrsystem und damit zu einem Druckabfall. Nachdem die Kraftstoffmenge, die eingespritzt wird, berechnet werden kann, kann auch der daraus resultierende Druckabfall des Einspritzdruckes, der am Einspritzventil anliegt, berechnet werden und bei der Simulation des Einspritzdruckes berücksichtigt werden.

Manche Ausführungsbeispiele betreffen ein Kraftfahrzeug mit einer Verbrennungskraftmaschine, die wenigstens einen Zylinder mit einem Einspritzventil zum Einspritzen von Kraftstoff in den Zylinder aufweist, und mit einer Kraftstoffpumpe, die einen Einspritzdruck zum Einspritzen des Kraftstoffes in den wenigstens einen Zylinder erzeugt, wie es oben bereits ausgeführt wurde. Außerdem ist eine Steuerung vorgesehen, die dazu eingerichtet ist, das oben beschriebene Verfahren auszuführen. Die Steuerung kann einen Mikroprozessor und einen Speicher aufweisen.

Ausführungsbeispiele der Erfindung werden nun beispielhaft und unter Bezugnahme auf die beigefügte Zeichnung beschrieben, in der:
- Fig. 1: schematisch ein Ausführungsbeispiel eines Kraftfahrzeugs mit einer Common-Rail-Einspritzung veranschaulicht; und
- Fig. 2: einen gemessenen und simulierten Raildruckverlauf der Common-Rail-Einspritzung von Fig. 1 veranschaulicht.

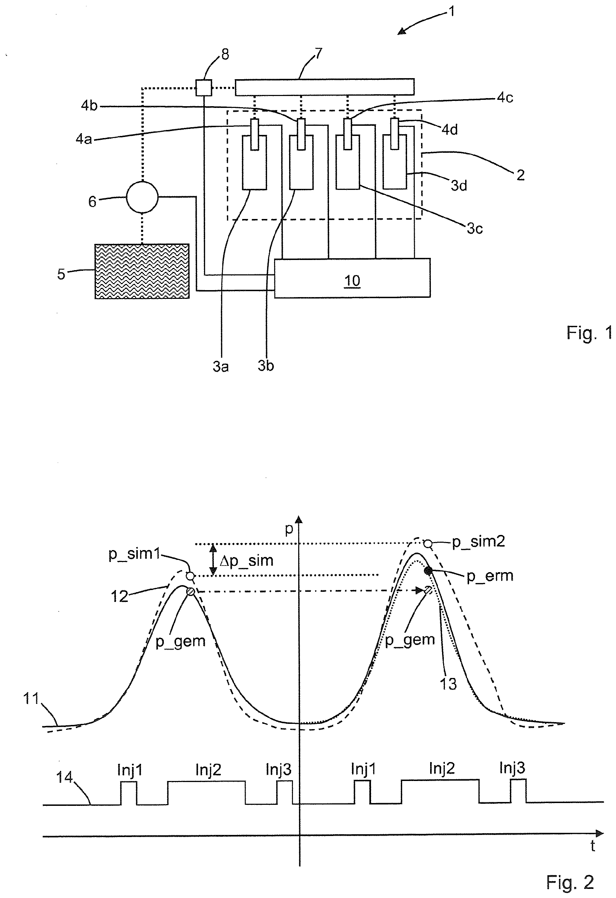

Fig. 1 veranschaulicht ein Kraftfahrzeug 1 mit einer Verbrennungskraftmaschine 2, die als Dieselmotor ausgestaltet ist. Die Verbrennungskraftmaschine 2 hat vier Zylinder 3a-d die über ein Common-Rail-Einspritzsystem mit Kraftstoff aus einem Kraftstofftank 5 versorgt werden. Das Common-Rail-Einspritzsystem hat für jeden der Zylinder 3a-d jeweils ein Einspritzventil 4a-d, das heißt im in Fig. 1 linken ersten Zylinder 3a ist ein Einspritzventil 4a angeordnet, im zweiten Zylinder 3b ist ein Einspritzventil 4b angeordnet usw.

Eine Kraftstoffpumpe 6, die als Hochdruckpumpe ausgestaltet ist, saugt Kraftstoff aus dem Kraftstofftank 5 an, erzeugt einen Einspritzdruck, der z.B. bei 1600 bar liegt, und liefert den Kraftstoff über eine Kraftstoffleitung (gepunktete Linie in Fig. 1) zu einem Rail 7, das als Kraftstoff-Hochdruckspeicher ausgestaltet ist. Jedes der Einspritzventile 4a-d ist mit dem Rail 7 verbunden, sodass der Kraftstoff jedem Einspritzventil 4a-d mit dem von der Kraftstoffpumpe 6 erzeugten Einspritzdruck zugeführt wird. Zur Messung des Einspritzdruckes ist ein Einspritzdrucksensor 8 in der Kraftstoffleitung vor dem Rail 7 vorgesehen. Zwischen der Kraftstoffpumpe 6 und dem Kraftstofftank 5 kann bei anderen Ausführungsbeispielen noch eine weitere Kraftstoffpumpe zum Fördern des Kraftstoffes aus dem Kraftstofftank 5 vorgesehen sein. Außerdem kann an einem Ende des Rails 7 ein Überdruckventil angeordnet sein, das bei einem zu hohen Einspritzdruck und/oder in Reaktion auf ein Steuersignal öffnet und Kraftstoff über eine Kraftstoffleitung zurück in den Kraftstofftank 5 führt.

Eine Steuerung 10 ist mit den Einspritzventilen 4a-d, der Kraftstoffpumpe 6 und dem Einspritzdrucksensor 8 verbunden und kann folglich die Einspritzventile 4a-d und die Kraftstoffpumpe 6 steuern und von der Kraftstoffpumpe 6 und dem Einspritzdrucksensor 8 Kraftstoffpumpendaten bzw. Einspritzdrucksensordaten empfangen.

Das Verfahren zum Ermitteln eines Einspritzdruckes, das von der Steuerung ausgeführt wird, wird im Folgenden anhand der Fig. 2 erläutert.

In der Fig. 2 ist auf der Ordinate ein Einspritzdruck "p" dargestellt und auf der Abszisse die Zeit "t". Die Ordinate ist so angeordnet, dass links von ihr ein erster Arbeitszyklus eines der Zylinder 3a-d bzw. der zugehörige Einspritzdruckverlauf gezeigt ist und rechts von ihr ein zweiter Arbeitszyklus des Zylinders bzw. der zugehörige Einspritzdruckverlauf. Im Folgenden wird ohne Beschränkung der Allgemeinheit das Verfahren für den ersten Zylinder 3a beschrieben. Für die anderen Zylinder 3c-d für die Steuerung 10 das Verfahren analog aus.

Dargestellt sind in Fig. 2 ein gemessener Einspritzdruckverlauf 11 (als durchgehende Linie dargestellt), der mithilfe des Einspritzdrucksensors 8 gemessen wird, ein simulierter Einspritzdruckverlauf 12 (als gestrichelte Linie dargestellt) und ein korrigierter ermittelter Einspritzdruckverlauf 13 (als gepunktete Linie dargestellt).

Im vorliegenden Ausführungsbeispiel gibt es pro Arbeitszyklus des Zylinders 3a drei Einspritzungen Inj1, Inj2 und Inj3, die durch einen Einspritzverlauf 14 veranschaulicht sind, nämlich eine erste Einspritzung Inj1 (Voreinspritzung), eine zweite Einspritzung Inj2 (Haupteinspritzung) und eine dritte Einspritzung Inj3 (Nacheinspritzung). Die drei Einspritzungen Inj1, Inj2 und Inj3 treten in jedem Arbeitszyklus des Zylinders 3a zu analogen Zeitpunkten auf.

Die Anzahl, der Zeitpunkt und die Kraftstoffmenge der jeweiligen Einspritzungen hängen von unterschiedlichen Randparametern ab, wie z.B. einer Lastanforderung, einem eingelegten Gang, einer Drehzahl der Verbrennungskraftmaschine 2, von Betriebsmodi (z.B. DPF-(Dieselpartikelfilter)-Regeneration) und dergleichen. Die Einspritzlage, das heißt der Einspritzzeitpunkt, und die Einspritzmenge werden entsprechend vorgegeben. Außerdem können weitere Randbedingungen die Anzahl, die Einspritzlage und die Einspritzmenge beeinflussen und zu entsprechenden Änderungen oder Korrekturen führen, wie z.B. die Umgebungstemperatur, der Luftdruck usw.

Bei einem normalen Betriebsmodus können zum Beispiel auch zwei Voreinspritzungen, eine Haupteinspritzung und eine Nacheinspritzung als Einspritzstrategie vorgesehen sein. Während einer DPF-Regeneration hingegen können zum Beispiel zwei Voreinspritzungen, eine Haupteinspritzung und drei Nacheinspritzungen vorgesehen sein. Die Einspritzungen verteilen sich typischerweise bei einem Kurbelwellenwinkel von 80° vor dem oberen Totpunkt des betreffenden Zylinders bis 180° Kurbelwellenwinkel nach dem oberen Totpunkt des betreffenden Zylinders.

Zur Vereinfachung wird das Verfahren nur für die zweite Einspritzung Inj2 (Haupteinspritzung) erläutert; es wird aber analog für die erste Inj1 und die dritte Einspritzung Inj3 von der Steuerung 10 durchgeführt.

Im ersten Arbeitszyklus misst die Steuerung 10 für die zweite Einspritzung Inj2 den Einspritzdruckwert p_gem mit Hilfe des Einspritzdrucksensors 8, der einen tatsächlichen, gemessenen Einspritzdruck während der Einspritzung Inj2 darstellt. Der gemessene Einspritzdruckwert p_gem steht erst nach Beginn der Einspritzung Inj2 zur Verfügung. Außerdem ermittelt die Steuerung 10 einen ersten simulierten Einspritzdruckwert p_sim1 für denselben Zeitpunkt während der zweiten Einspritzung Inj2 des ersten Arbeitszyklusses, für den auch der gemessene Einspritzdruckwert p_gem von der Steuerung 10 gemessen wurde. Der erste simulierte Einspritzdruckwert p_sim1 ist nicht identisch zum gemessenen Einspritzdruckwert p_gem, sondern er ist höher, wobei dies hier nur beispielhaft zu verstehen ist und zur Veranschaulichung einer stationär ungenauen Simulation dient. Die Einspritzdruckwerte p_gem und p_sim1 speichert die Steuerung 10 für die spätere Verwendung. Das Analoge führt die Steuerung 10 für die erste Einspritzung Inj1 und die dritte Einspritzung Inj3 durch.

Im zweiten Arbeitszyklus hat sich im vorliegenden Ausführungsbeispiel der Einspritzdruck erhöht. Um nun den bei der zweiten Einspritzung Inj2 im zweiten Arbeitszyklus vorliegenden Einspritzdruck vor dem Beginn der zweiten Einspritzung Inj2 zu ermitteln, wird zunächst als Ausgangsbasis der entsprechende gemessene Einspritzdruckwert p_gem des vorherigen ersten Arbeitszyklusses der zweiten Einspritzung Inj2 genommen.

Außerdem ermittelt die Steuerung 10 einen zweiten simulierten Einspritzdruckwert p_sim2 für die zweite Einspritzung Inj2 des zweiten Arbeitszyklusses. Da mit der Ermittlung des zweiten simulierten Einspritzdruckwerts p_sim2 entsprechend früh begonnen werden kann, liegt das Ergebnis vor, bevor mit der zweiten Einspritzung Inj2 begonnen wird. Die Steuerung 10 beginnt entsprechend mit der Ermittlung des zweiten simulierten Einspritzdruckwertes p_sim2 vor Beginn der Einspritzung Inj2. Dann ermittelt die Steuerung 10 eine Einspritzdruckdifferenz Δp_sim zwischen dem ersten simulierten Einspritzdruckwert p_sim1 des ersten Arbeitszyklusses und dem zweitem simulierten Einspritzdruckwert p_sim2 des zweiten Arbeitszyklusses. Anhand der Einspritzdruckdifferenz Δp_sim ermittelt die Steuerung 10 einen ermittelten Einspritzdruckwert p_erm, indem die Steuerung die Einspritzdruckdifferenz Δp_sim zum ersten gemessenen Einspritzdruckwert p_gem des ersten Arbeitszyklusses hinzuaddiert. Der ermittelte Einspritzdruckwert p_erm liegt vor Beginn der zweiten Einspritzung Inj2 bzw. vor der Berechnung der für die Steuerung des Einspritzventils für die Einspritzung Inj2 benötigten Einspritzdauer vor.

Im vorliegenden Ausführungsbeispiel empfängt die Steuerung 10 Kraftstoffpumpendaten von der Kraftstoffpumpe 6, die die angesaugte Kraftstoffmenge repräsentieren. Außerdem kennt die Steuerung 10 grundsätzlich den Einspritzdruckverlauf, sodass die Steuerung 10 anhand dieser Daten den ersten p_sim1 bzw. zweiten p_sim2 simulierten Einspritzdruck berechnen kann, bevor die zweite Einspritzung Inj2 vorgenommen wird.

Dadurch, dass die Steuerung 10 als Grundlage den gemessenen Einspritzdruckwert p_gem des ersten Arbeitszyklusses verwendet, liegt grundsätzlich ein genauer Einspritzdruckwert p_gem vor, der sich bei einem stationären Zustand der Verbrennungskraftmaschine 2 zum nächsten Arbeitszyklus nicht wesentlich ändern würde. Bei einem solchen Fall wäre die ermittelte Einspritzdruckdifferenz Δp_sim klein oder sogar gleich Null.

Bei dem vorliegenden Fall erhöht sich aber, wie oben erwähnt, der Einspritzdruck vom ersten zum zweiten Arbeitszyklus, sodass der gemessene Einspritzdruckwert p_gem des ersten Arbeitszyklusses zu klein ist. Durch die Anpassung des gemessenen Einspritzdruckwertes p_gem auf Grundlage der Einspritzdruckdifferenz Δp_sim ist der ermittelte Einspritzdruckwert p_erm wesentlich näher an dem gemessenen Einspritzdruckverlauf 11 als es der gemessene Einspritzdruckwert p_gem wäre.

Dadurch dass die Steuerung 10 den ermittelten Einspritzdruckwert p_erm vor Beginn der zweiten Einspritzung Inj2 ermittelt hat, kann die Steuerung 10 das zugehörige Einspritzventil 4a des Zylinders 3a entsprechend ansteuern, sodass eine vorgegebene Einspritzmenge in den Zylinder 3a eingespritzt wird.

### Bezugszeichenliste

- 1: Kraftfahrzeug
- 2: Verbrennungskraftmaschine
- 3a-d: Zylinder der Verbrennungskraftmaschine
- 4a-d: Einspritzventile der Zylinder 3a-d
- 5: Kraftstofftank
- 6: Kraftstoffpumpe
- 7: Rail
- 8: Einspritzdrucksensor
- 10: Steuerung
- 11: Gemessener Einspritzdruckverlauf
- 12: Simulierter Einspritzdruckverlauf
- 13: Ermittelter Einspritzdruckverlauf
- 14: Einspritzverlauf
- Inj1: Erste Einspritzung
- Inj2: Zweite Einspritzung
- Inj3: Dritte Einspritzung
- p_sim1: Erster simulierter Einspritzdruck (erster Arbeitszyklus)
- p_sim2: Zweiter simulierter Einspritzdruck (zweiter Arbeitszyklus)
- Δp_sim: Differenz zwischen ersten und zweiten simulierten Einspritzdruck
- p_gem: Gemessener Einspritzdruck
- p_erm: Ermittelter Einspritzdruck

## Patentansprüche

1. Verfahren zum Ermitteln eines Einspritzdruckes (p_erm) zum Einspritzen eines Kraftstoffes durch ein Einspritzventil (4a-d) in einen Zylinder (3a-d) einer Verbrennungskraftmaschine (2), wobei der Einspritzdruck des Kraftstoffes von einer Kraftstoffpumpe (6) erzeugt wird, mit den Schritten:
in einem ersten Arbeitszyklus des Zylinders (3a-d), Messen eines ersten gemessenen Einspritzdruckwertes (p_gem) des durch das Einspritzventil (4a-d) eingespritzten Kraftstoffes und Ermitteln eines ersten simulierten Einspritzdruckwertes (p_sim1);
in einem zweiten Arbeitszyklus des Zylinders (3a-d), Ermitteln eines zweiten simulierten Einspritzdruckwertes (p_sim2);
Ermitteln einer Differenz (Δp_sim) zwischen dem ersten simulierten Einspritzdruckwert (p_sim1) und dem zweiten simulierten Einspritzdruckwert (p_sim2); und
Ermitteln eines Einspritzdruckes (p_erm) zum Einspritzen des Kraftstoffes durch das Einspritzventil (4a-d) in den Zylinder (3a-d) im zweiten Arbeitszyklus auf Grundlage des ersten gemessenen Einspritzdruckwertes (p_gem) und der ermittelten Differenz (Δp_sim) zwischen dem ersten (p_sim1) und dem zweiten (p_sim2) simulierten Einspritzdruckwert, wobei der erste gemessene Einspritzdruckwert (p_gem) und der erste simulierte Einspritzdruckwert (p_sim1) jeweils einem Einspritzdruck an einem ersten vorgegebenen Zeitpunkt im ersten Arbeitszyklus entspricht und der zweite simulierte Einspritzdruckwert (p_sim2) einem Einspritzdruck an einem zweiten vorgegebenen Zeitpunkt im zweiten Arbeitszyklus entspricht, wobei der erste Zeitpunkt und der zweite Zeitpunkt einander derart entsprechen, dass die Einspritzdruckwerte aus dem ersten und zweiten Arbeitszyklus unter gleichen oder ähnlichen Bedingungen ermittelt wurden.

2. Verfahren nach Anspruch 1, wobei aus dem ermittelten Einspritzdruck (p_erm) zum Einspritzen des Kraftstoffes eine Ansteuerdauer für das Einspritzventil (4a-d) berechnet wird.

3. Verfahren nach Anspruch 2, wobei das Einspritzventil (4a-d) derart gesteuert wird, dass der Kraftstoff gemäß einer berechneten Einspritzmenge in den Zylinder (3a-d) eingespritzt wird.

4. Verfahren nach einem der vorhergehenden Ansprüche, wobei der erste gemessene Einspritzdruckwert (p_gem) mittels eines Drucksensors (8) gemessen wird.

5. Verfahren nach einem der vorhergehenden Ansprüche, wobei der erste und/oder der zweite simulierte Einspritzdruckwert (p_sim1, p_sim2) auf Grundlage von Betriebsdaten der Kraftstoffpumpe (6) ermittelt werden.

6. Kraftfahrzeug (1) mit einer Verbrennungskraftmaschine (2), die wenigstens einen Zylinder (3a-d) mit einem Einspritzventil (4a-d) zum Einspritzen von Kraftstoff in den Zylinder (3a-d) aufweist, mit einer Kraftstoffpumpe (6), die einen Einspritzdruck zum Einspritzen des Kraftstoffes in den wenigstens einen Zylinder (3a-d) erzeugt, und mit einer Steuerung (10), wobei die Steuerung (10) dazu eingerichtet ist, das Verfahren nach einem der vorhergehenden Ansprüche auszuführen.

## Claims

1. Method for determining an injection pressure (p_erm) for injecting a fuel into a cylinder (3a-d) of an internal combustion engine (2) by means of an injection valve (4a-d), wherein the injection pressure of the fuel is generated by a fuel pump (6), having the steps:
in a first working cycle of the cylinder (3a-d), measuring a first measured injection pressure value (p_gem) of the fuel injected by means of the injection valve (4a-d), and determining a first simulated injection pressure value (p_sim1); in a second working cycle of the cylinder (3a-d), determining a second simulated injection pressure value (p_sim2);
determining a difference (Δp_sim) between the first simulated injection pressure value (p_sim1) and the second simulated injection pressure value (p_sim2); and
determining an injection pressure (p_erm) for injecting the fuel into the cylinder (3a-d) in the second working cycle by means of the injection valve (4a-d) on the basis of the first measured injection pressure value (p_gem) and the determined difference (Δp_sim) between the first simulated injection pressure value (p_sim1) and the second simulated injection pressure value (p_sim2), wherein the first measured injection pressure value (p_gem) and the first simulated injection pressure value (p_sim1) each correspond to an injection pressure at a first predefined time in the first working cycle, and the second simulated injection pressure value (p_sim2) corresponds to an injection pressure at a second predefined time in the second working cycle, wherein the first time and the second time correspond to each other in such a way that the injection pressure values from the first and second working cycles have been determined under the same or similar conditions.

2. Method according to Claim 1, wherein an actuation period for the injection valve (4a-d) is calculated from the determined injection pressure (p_erm) for the injection of the fuel.

3. Method according to Claim 2, wherein the injection valve (4a-d) is controlled in such a way that the fuel is injected into the cylinder (3a-d) according to a calculated injection quantity.

4. Method according to one of the preceding claims, wherein the first measured injection pressure value (p_gem) is measured by means of a pressure sensor (8).

5. Method according to one of the preceding claims, wherein the first and/or the second simulated injection pressure value (p_sim1, p_sim2) are determined on the basis of operating data of the fuel pump (6).

6. Motor vehicle (1) having an internal combustion engine (2) which has at least one cylinder (3a-d) with an injection valve (4a-d) for injecting fuel into the cylinder (3a-d), having a fuel pump (6) which generates an injection pressure for the injection of the fuel into the at least one cylinder (3a-d), and having a controller (10), wherein the controller (10) is configured to carry out the method according to one of the preceding claims.

## Revendications

1. Procédé de détermination d'une pression d'injection (p_erm) pour l'injection d'un carburant par un injecteur (4a-d) dans un cylindre (3a-d) d'un moteur à combustion interne (2), dans lequel on produit la pression d'injection du carburant au moyen d'une pompe à carburant (6), comportant les étapes suivantes:
dans un premier cycle de travail du cylindre (3a-d), mesure d'une première valeur de pression d'injection mesurée (p_gem) du carburant injecté par l'injecteur (4a-d) et détermination d'une première valeur de pression d'injection simulée (p_sim1);
dans un deuxième cycle de travail du cylindre (3a-d), détermination d'une deuxième valeur de pression d'injection simulée (p_sim2);
détermination d'une différence (Δp_sim) entre la première valeur de pression d'injection simulée (p_sim1) et la deuxième valeur de pression d'injection simulée (p_sim2); et
détermination d'une pression d'injection (p_erm) pour l'injection du carburant par l'injecteur (4a-d) dans le cylindre (3a-d) dans le deuxième cycle de travail sur la base de la première valeur de pression d'injection mesurée (p_gem) et de la différence déterminée (Δp_sim) entre la première (p_sim1) et la deuxième (p_sim2) valeurs de pression d'injection simulées,
dans lequel la première valeur de pression d'injection mesurée (p_gem) et la première valeur de pression d'injection simulée (p_sim1) correspond respectivement à une pression d'injection à un premier instant prédéterminé dans le premier cycle de travail et la deuxième valeur de pression d'injection simulée (p_sim2) correspond à une pression d'injection à un deuxième instant prédéterminé dans le deuxième cycle de travail, dans lequel le premier instant et le deuxième instant se correspondent mutuellement de telle manière que les valeurs de pression d'injection du premier et du deuxième cycles de travail aient été déterminées dans des conditions identiques ou similaires.

2. Procédé selon la revendication 1, dans lequel on calcule à partir de la pression d'injection déterminée (p_erm) pour l'injection du carburant une durée de commande pour l'injecteur (4a-d).

3. Procédé selon la revendication 2, dans lequel on commande l'injecteur (4a-d) de telle manière que le carburant soit injecté dans le cylindre (3a-d) selon une quantité d'injection calculée.

4. Procédé selon l'une quelconque des revendications précédentes, dans lequel on mesure la première pression d'injection mesurée (p_gem) au moyen d'un capteur de pression (8).

5. Procédé selon l'une quelconque des revendications précédentes, dans lequel on détermine la première et/ou la deuxième valeurs de pression d'injection simulées (p_sim1, p_sim2) sur la base de données de fonctionnement de la pompe à carburant (6).

6. Véhicule automobile (1) avec un moteur à combustion interne (2), qui présente au moins un cylindre (3a-d) avec un injecteur (4a-d) pour l'injection de carburant dans le cylindre (3a-d), avec une pompe à carburant (6), qui produit une pression d'injection pour l'injection du carburant dans ledit au moins un cylindre (3a-d), et avec une commande (10), dans lequel la commande (10) est conçue pour exécuter le procédé selon l'une quelconque des revendications précédentes.
